# EUROPEAN PATENT APPLICATION

(11) **EP 2 930 667 A1**
(43) Date of publication of application: **14.10.2015**
(21) Application number: 15162499.6
(22) Date of filing: 02.04.2015
(51) Int. Cl.: G06Q 10/00, H04L 29/08

(54) **METHODS AND SYSTEMS FOR PROVIDING DATA BETWEEN ELECTRONIC DEVICES**

(30) Priority: 10.04.2014 TW 103113170
(71) Applicant: Zappoint Corporation, Taipei City 115 (TW)
(72) Inventor: Chien, Hsi-Tsun, 115 Taipei City (TW); Wang, John C., 115 Taipei City (TW)
(74) Representative: Karakatsanis, Georgios

(57) **Abstract**

Methods and systems for providing data between electronic devices (100) are provided. First, a first electronic device (110) outputs a first signal to an environment. A second electronic device (120) receives a second signal from the environment via an environment data obtaining unit (310). In some embodiments, the first signal and the second signal are respectively transmitted to a server (130) via a network (140). In other embodiments, the second signal is transmitted to the first electronic device (110). The server (130) or the first electronic device (110) determines whether the second signal conforms to the first signal. If so, specific data (211) corresponding to the first electronic device (110) is provided to the second electronic device (120). In some embodiments, when the signals received by several electronic devices conform to the first signal, data corresponding to the respective electronic devices is exchanged.

## Description

### BACKGROUND

### Technical Field

The disclosure relates generally to methods and systems for providing data between electronic devices, and, more particularly to methods and systems that can determine whether to provide data corresponding to an electronic device to another electronic device based on signals received from an environment.

### Description of the Related Art

Recently, electronic devices, such as smart phones, notebooks, wearable devices or other portable devices, have become more and more technically advanced and multifunctional. For example, portable devices have network connectivity capabilities. Users can use their portable devices to connect to networks at anytime and anywhere. The convenience and new functionalities advanced by modern technology have made these devices into necessities of life.

As described, since electronic devices have network connectivity capabilities, electronic devices can obtain data from networks, and electronic devices can exchange data with each other via networks. As a result, there are numerous network applications or services that provide various data exchange mechanisms, so that data exchange between electronic devices can be more convenient and interesting. For example, each electronic device may have at least one motion sensor for detecting a motion of the electronic device. When two electronic devices generate the same motion simultaneously, data such as digital business cards corresponding to the respective electronic devices can be exchanged.

Generally, the provision and exchange mechanism for data must have high accuracy and security since the data may be private or confidential. This is where existing data exchange mechanisms have some drawbacks. For example, the target device, which is expected to exchange data cannot be accurately identified. Consequently, a user of an electronic device must manually select the target device, so that the subsequent data exchange process can be performed. This is inconvenient, since the user of the electronic device needs to ask the user of the target device to provide the identification details of the target device. More importantly, in cases when wrong devices are selected, the data corresponding to the user may be leaked, thereby significantly damaging the security of exchanged data.

### SUMMARY

Methods and systems for providing data between electronic devices are provided, in which data corresponding to an electronic device can be provided to another electronic device based on signals received from an environment.

In an embodiment of a method for providing data between electronic devices, a first electronic device outputs a first signal to an environment, and transmits the first signal to a server via a first network. A second electronic device receives a second signal from the environment via an environment data obtaining unit, and transmits the second signal to the server via a second network. The server determines whether the second signal conforms to the first signal. When the second signal conforms to the first signal, first data corresponding to the first electronic device is provided to the second electronic device.

An embodiment of a system for providing data between electronic devices comprises a server, a first electronic device, and a second electronic device. The first electronic device outputs a first signal to an environment, and transmits the first signal to the server via a first network. The second electronic device receives a second signal from the environment via an environment data obtaining unit, and transmits the second signal to the server via a second network. The server determines whether the second signal conforms to the first signal. When the second signal conforms to the first signal, the server provides first data corresponding to the first electronic device to the second electronic device.

In some embodiments, when the second signal conforms to the first signal, the first data corresponding to the first electronic device and second data corresponding to the second electronic device is exchanged. In some embodiments, an interface is respectively provided in the first electronic device and the second electronic device, for selecting the first data and the second data respectively from candidate first data and candidate second data.

In some embodiments, the server determines whether a reception time when the second signal is received by the second electronic device and a generation time when the first signal is generated are within a predefined interval. When the reception time corresponding to the second signal and the generation time corresponding to the first signal are within the predefined interval, and the second signal conforms to the first signal, the first data corresponding to the first electronic device is provided to the second electronic device.

In some embodiments, a third electronic device receives a third signal from the environment via an environment data obtaining unit, and transmits the third signal to the server via a third network. The server determines whether a reception time when the third signal is received by the third electronic device, a reception time when the second signal is received by the second electronic device and a generation time when the first signal is generated are within a predefined interval. When the reception time corresponding to the third signal, the reception time corresponding to the second signal, and the generation time corresponding to the first signal are within the predefined interval, and the third signal conforms to the first signal and the second signal conforms to the first signal, a data exchange process is performed based on the first data corresponding to the first electronic device, the second data corresponding to the second electronic device, and third data corresponding to the third electronic device.

In some embodiments, the server determines whether a position corresponding to the first electronic device and a position corresponding to the second electronic device are within a predefined range. When the position corresponding to the first electronic device and the position corresponding to the second electronic device are within the predefined range, and the second signal conforms to the first signal, the first data corresponding to the first electronic device is provided to the second electronic device.

In some embodiments, the first electronic device generates first identification data, and transforms the first identification data into the first signal according to an algorithm. In some embodiments, the algorithm is selected from a plurality of candidate algorithms.

In some embodiments, the step of determining whether the second signal conforms to the first signal is performed by respectively transforming the first signal and the second signal into first identification data and second identification data according to an algorithm, and determining whether the second identification data conforms to the first identification data.

In some embodiments, the first signal or the second signal comprises a sound, a light code, an image, a pattern, and/or a smell.

In an embodiment of a method for providing data between electronic devices, a first electronic device generates first identification data, transforms the first identification data into a first signal according to an algorithm, and outputs the first signal to an environment. A second electronic device receives a second signal from the environment via an environment data obtaining unit. It is determined whether the second signal conforms to the first signal. When the second signal conforms to the first signal, first data corresponding to the first electronic device is provided to the second electronic device.

An embodiment of a system for providing data between electronic devices comprises an output unit, a network connecting unit, and a processing unit. The processing unit generates first identification data, transforms the first identification data into a first signal according to an algorithm, and outputs the first signal to an environment via the output unit. The network connecting unit receives a second signal from a specific electronic device via a network. The processing unit determines whether the second signal conforms to the first signal, and provides first data corresponding to an electronic device to the specific electronic device.

In some embodiments, the second electronic device or the specific electronic device transmits the second signal to the first electronic device, and the first electronic device determines whether the second signal conforms to the first signal.

In an embodiment of a method for providing data between electronic devices, a first electronic device receives a first signal from an environment, and a second electronic device receives a second signal from the environment. It is determined whether the second signal conforms to the first signal. When the second signal conforms to the first signal, first data corresponding to the first electronic device and second data corresponding to the second electronic device is exchanged.

An embodiment of a system for providing data between electronic devices comprises a first electronic device and a second electronic device. The first electronic device receives a first signal from an environment. The second electronic device receives a second signal from the environment. The first electronic device and/or the second electronic device determines whether the second signal conforms to the first signal. When the second signal conforms to the first signal, first data corresponding to the first electronic device and second data corresponding to the second electronic device is exchanged.

In some embodiments, the first electronic device transmits the first signal to a server via a network, and the second electronic device transmits the second signal to the server via a network. The server determines whether the second signal conforms to the first signal.

The effect of the methods and systems for providing data between electronic devices of the present invention can determine whether to provide data corresponding to an electronic device to another electronic device based on signals received from an environment, thereby increasing the applicability, accuracy, and security of data transmission between electronic devices.

Methods for providing data between electronic devices may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed descriptions with references to the accompanying drawings, wherein:
Fig. 1 is a schematic diagram illustrating an embodiment of a system for providing data between electronic devices of the invention;
Fig. 2 is a schematic diagram illustrating an embodiment of a first electronic device of the invention;
Fig. 3 is a schematic diagram illustrating an embodiment of a second electronic device of the invention;
Fig. 4 is a flowchart of an embodiment of a method for providing data between electronic devices of the invention;
Fig. 5 is a flowchart of an embodiment of a method for generating signals of the invention;
Fig. 6 is a flowchart of another embodiment of a method for generating signals of the invention;
Fig. 7 is a flowchart of another embodiment of a method for providing data between electronic devices of the invention;
Fig. 8 is a flowchart of another embodiment of a method for providing data between electronic devices of the invention;
Fig. 9 is a schematic diagram illustrating an example of data provision between electronic devices of the invention;
Fig. 10 is a flowchart of another embodiment of a method for providing data between electronic devices of the invention;
Fig. 11 is a schematic diagram illustrating an example of data provision between electronic devices of the invention;
Fig. 12 is a flowchart of another embodiment of a method for providing data between electronic devices of the invention;
Fig. 13 is a schematic diagram illustrating an example of data provision between electronic devices of the invention; and
Fig. 14 is a flowchart of another embodiment of a method for providing data between electronic devices of the invention.

### DETAILED DESCRIPTION OF THE INVENTION

Methods and systems for providing data between electronic devices are provided.

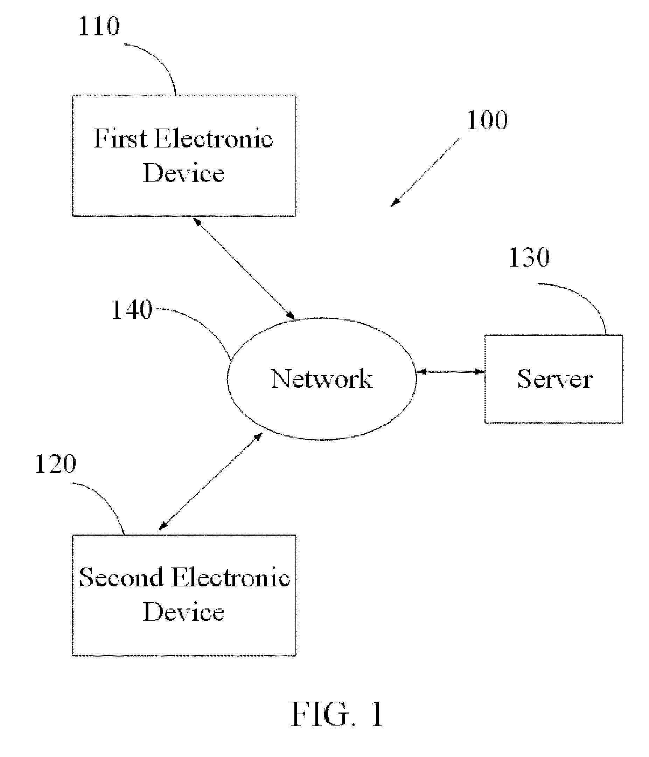

Fig. 1 is a schematic diagram illustrating an embodiment of a system for providing data between electronic devices of the invention. As shown in Fig. 1, the system for providing data between electronic devices 100 can comprise a plurality of electronic devices, such as a first electronic device 110 and a second electronic device 120, and/or a server 130. The electronic devices can communicate with each other via a network 140, such as a wired network, a telecommunication network, and/or a wireless network. Additionally, each electronic device can couple to the server 130 via the network 140.

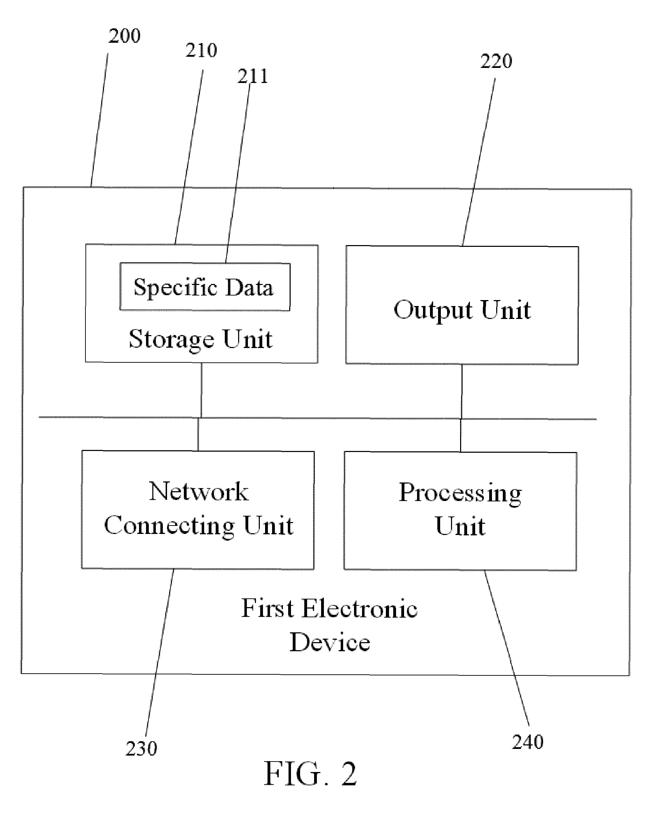

Fig. 2 is a schematic diagram illustrating an embodiment of a first electronic device of the invention. The first electronic device may be any processor-based electronic device, such as a computer, or a portable device, such as a mobile phone, a smart phone, a PDA (Personal Digital Assistant), a GPS (Global Positioning System), a tablet or a wearable device. As shown in Fig. 2, the first electronic device 200 comprises a storage unit 210, an output unit 220, a network connecting unit 230, and a processing unit 240. The storage unit 210 stores specific data 211 corresponding to the first electronic device 200. It is understood that, in some embodiments, the specific data 211 may be a digital business card, identification data, financial account information, and/or account information corresponding to an application. It is noted that, the specific data above is only an example of the present invention, and the invention is not limited thereto. It is understood that, in some embodiments, the server in the Fig. 1 can have the specific data corresponding to the first electronic device. The output unit 220 may be a component, which can output a signal from the electronic device to an environment. In some embodiments, the output unit 220 is a sound output unit, such as a speaker for outputting a signal, such as a sound to the environment. In some embodiments, the output unit 220 is a light emitting unit, such as an LED (Light Emitting Diode) or a flash light for outputting a signal, such as a light code to the environment. It is understood that, in some embodiments, the first electronic device 200 can further comprise a display unit (not shown in Fig. 2) for displaying related information, such as images, interfaces, and related data. In some embodiments, the output unit 220 is a display unit for displaying an image or a pattern. In some embodiments, the output unit 220 is a smell generation unit for outputting a smell to the environment. The network connecting unit 230 can connect to a network, such as a wired network, a telecommunication network, and/or a wireless network. The first electronic device 200 can have network connectivity capabilities by using the network connecting unit 230. The processing unit 240 can control related operations of hardware and software in the first electronic device 200, and perform the methods for providing data between electronic devices, which will be discussed later.

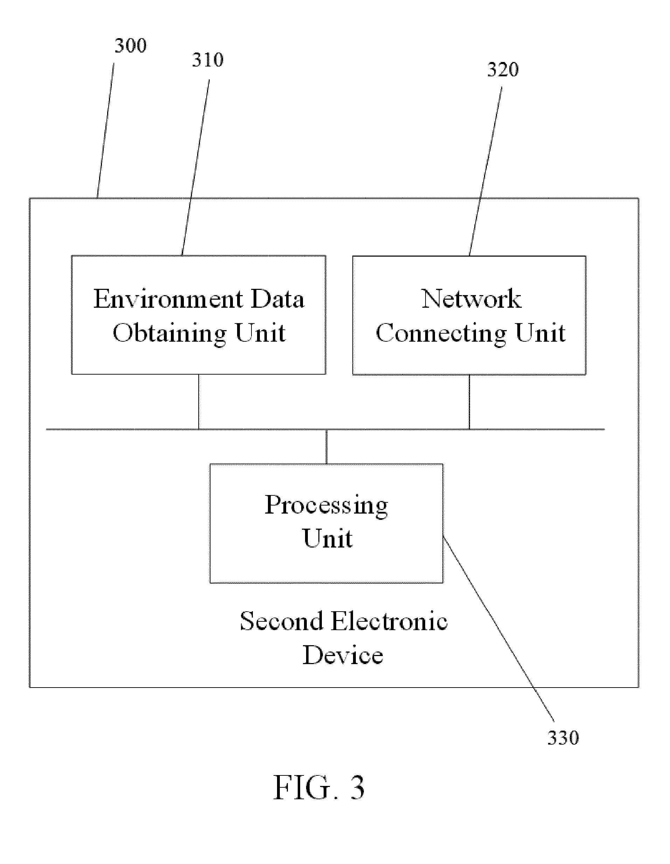

Fig. 3 is a schematic diagram illustrating an embodiment of a second electronic device of the invention. The second electronic device may be any processor-based electronic device, such as a computer, or a portable device, such as a mobile phone, a smart phone, a PDA, a GPS, a tablet or a wearable device. As shown in Fig. 3, the second electronic device 300 comprises an environment data obtaining unit 310, a network connecting unit 320, and a processing unit 330. The environment data obtaining unit 310 can receive related signals from an environment where the electronic device is located. In some embodiments, the environment data obtaining unit 310 is a sound reception unit, such as a microphone for receiving a sound from the environment. In some embodiments, the environment data obtaining unit 310 is an image capture unit for receiving a light code, an image, and/or a pattern. In some embodiments, the environment data obtaining unit 310 is a smell reception unit for receiving a smell from the environment. The network connecting unit 320 can connect to a network, such as a wired network, a telecommunication network, and/or a wireless network. The second electronic device 300 can have network connectivity capabilities by using the network connecting unit 230. The processing unit 330 can control related operations of hardware and software in the second electronic device 300, and perform the methods for providing data between electronic devices, which will be discussed later. It is understood that, in some embodiments, the second electronic device 300 can further comprise a storage unit (not shown in Fig. 3) for storing specific data corresponding to the second electronic device 300. Similarly, in some embodiments, the specific data may be a digital business card, identification data, financial account information, and/or account information corresponding to an application. It is noted that, the specific data above is only an example of the present invention, and the invention is not limited thereto. Similarly, in some embodiments, the server in the Fig. 1 can have the specific data corresponding to the second electronic device. It is understood that, in some embodiments, the second electronic device 300 can further comprise a display unit (not shown in Fig. 3) for displaying related information, such as images, interfaces, and related data.

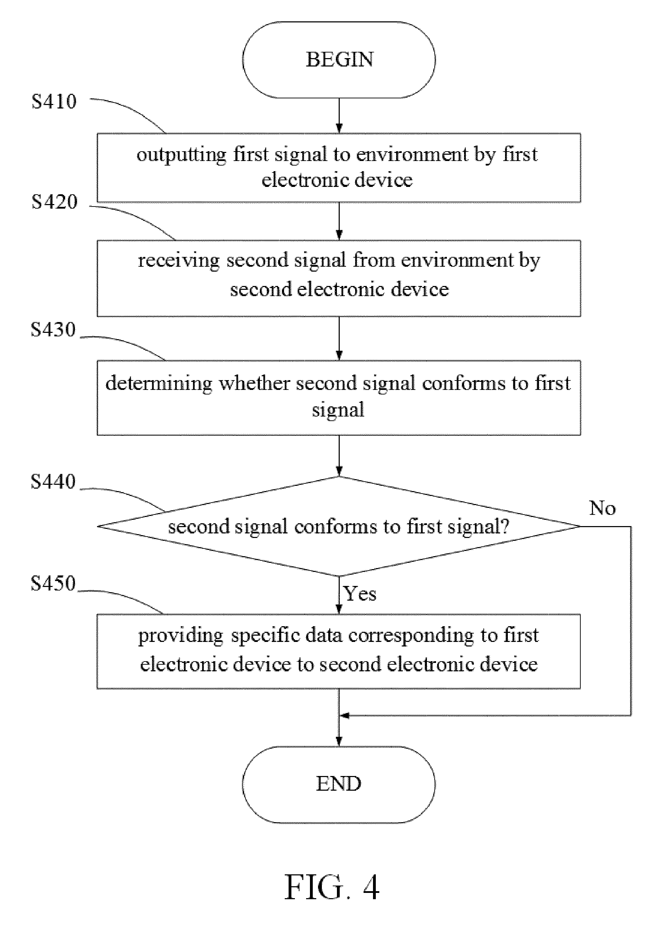

Fig. 4 is a flowchart of an embodiment of a method for providing data between electronic devices of the invention. The method for providing data between electronic devices can be used in a first electronic device and a second electronic device. As described, the electronic device can be any processor-based electronic device, such as a computer, or a portable device, such as a mobile phone, a smart phone, a PDA, a GPS, a tablet or a wearable device.

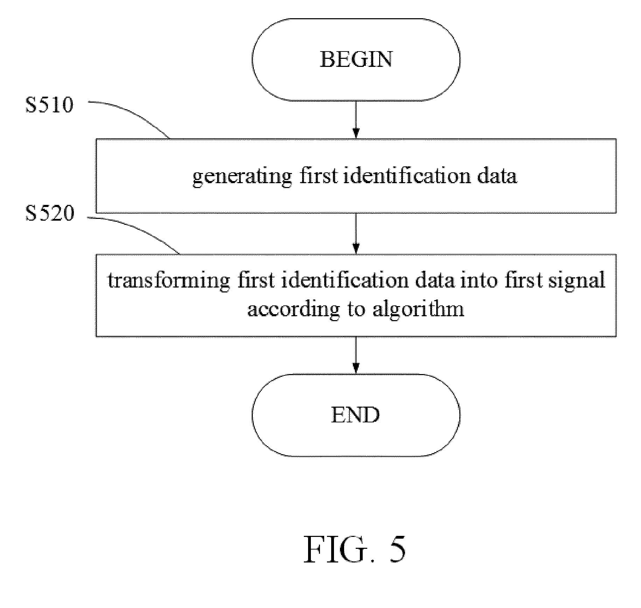

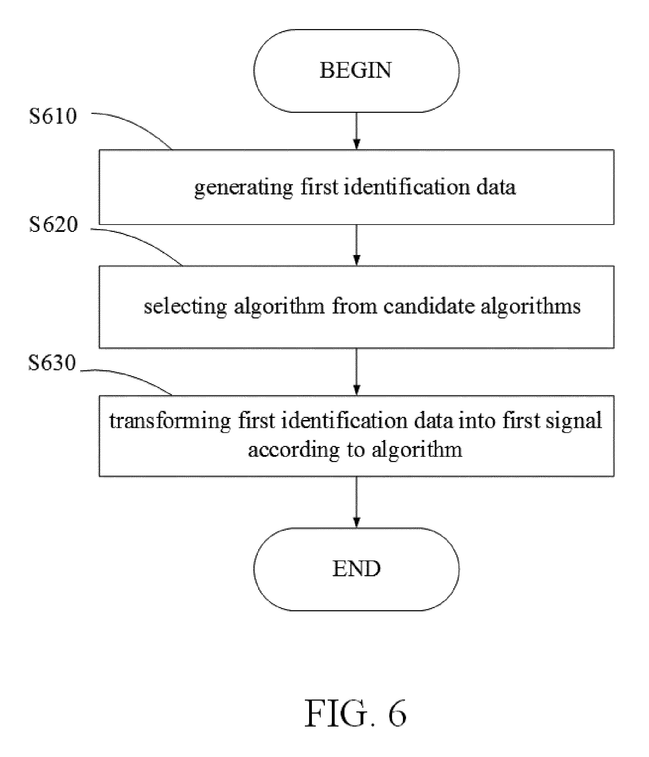

In step S410, the first electronic device outputs a first signal to an environment. It is understood that, in some embodiments, the signal output by the first electronic device may be a sound, a light code, an image, a pattern, and/or a smell. Fig. 5 is a flowchart of an embodiment of a method for generating signals of the invention. First, in step S510, the first electronic device generates first identification data. It is understood that, in some embodiments, the first electronic device can randomly generate the first identification data according to specific information, such as the current time. In some embodiments, the first electronic device can select the first identification data from a set of candidate identification data. It is noted that, the generation of the first identification data is only an example of the present invention, and the invention is not limited thereto. Then, in step S520, the first identification data is transformed into a first signal according to an algorithm. As described, the signal output by the first electronic device may be a sound. In some embodiments, the algorithm may be DTMF (Dual-Tone Multi-Frequency) algorithm, FSK (Frequency-Shift Keying) algorithm, and/or any algorithm which can transform data into sounds. As described, the signal output by the first electronic device may be a light code. In some embodiments, the algorithm may be an algorithm which transforms texts into Morse code, and/or any algorithm which can transform data into a light code. As described, the signal output by the first electronic device may be an image or a pattern. In some embodiments, the algorithm may be any algorithm which can transform texts into an image or a pattern. As described, the signal output by the first electronic device may be a smell. In some embodiments, the algorithm may be an algorithm which can transform texts to a smell. Fig. 6 is a flowchart of another embodiment of a method for generating signals of the invention. First, in step S610, the first electronic device generates first identification data. Similarly, in some embodiments, the first electronic device can randomly generate the first identification data according to specific information, such as the current time. In some embodiments, the first electronic device can select the first identification data from a set of candidate identification data. It is noted that, the generation of the first identification data is only an example of the present invention, and the invention is not limited thereto. Then, in step S620, an algorithm is selected from a plurality of candidate algorithms. Similarly, the signal output by the first electronic device may be a sound. In some embodiments, the algorithm may be DTMF algorithm, FSK algorithm, and/or any algorithm which can transform data into sounds. As described, the signal output by the first electronic device may be a light code. In some embodiments, the algorithm may be an algorithm which transforms texts into Morse code, and/or any algorithm which can transform data into a light code. As described, the signal output by the first electronic device may be an image or a pattern. In some embodiments, the algorithm may be any algorithm which can transform texts into an image or a pattern. As described, the signal output by the first electronic device may be a smell. In some embodiments, the algorithm may be any algorithm which can transform texts to a smell. It is understood that, in some embodiments, the first electronic device can randomly select an algorithm from the candidate algorithms. In some embodiments, the first electronic device can select an algorithm from the candidate algorithms based on a specific rule. It is noted that, the invention is not limited to any manner for selecting the algorithm. After the algorithm is selected, in step S630, the first identification data is transformed into a first signal according to an algorithm.

After the first signal is output to the environment, in step S420, the second electronic device receives a second signal from the environment via an environment data obtaining unit. It is noted that, when the first signal is output by the first electronic device, the second electronic device can simultaneously receive the second signal from the environment via the environment data obtaining unit. For example, when the first electronic device outputs a first sound to an environment via a sound output unit, the second electronic device can simultaneously receive sounds in the environment via a sound reception unit to obtain a second sound. When the first electronic device outputs a first light code to an environment via a light emitting unit, the second electronic device can simultaneously capture images in the environment via an image capture unit to obtain a second light code. When the first electronic device displays a first image or pattern via a display unit, the second electronic device can simultaneously capture images via an image capture unit to obtain a second image or pattern. When the first electronic device generates and outputs a first smell to an environment via a smell generation unit, the second electronic device can simultaneously detect the smell in the environment via a smell reception unit to obtain a second smell. Then, in step S430, it is determined whether the second signal received by the second electronic device conforms to the first signal output by the first electronic device. It is understood that, in some embodiments, the step of determining whether the second signal conforms to the first signal is performed by respectively transforming the first signal and the second signal into first identification data and second identification data according to an algorithm, and determining whether the second identification data conforms to the first identification data. It is noted that, when the first signal is generated according to a specific algorithm, the determination for signals can be performed according to the specific algorithm. When the second signal does not conform to the first signal (No in step S440), the procedure is complete. When the second signal conforms to the first signal (Yes in step S440), in step S450, specific data (first data) corresponding to the first electronic device is provided to the second electronic device. It is understood that, in some embodiments, when the second signal conforms to the first signal, the specific data (first data) corresponding to the first electronic device and specific data (second data) corresponding to the second electronic device is exchanged. It is noted that, in some embodiments, the specific data may be a digital business card, identification data, financial account information, and/or account information corresponding to an application. It is noted that, the specific data above is only an example of the present invention, and the invention is not limited thereto. Additionally, in some embodiments, an interface is respectively provided in the first electronic device and the second electronic device, for respectively selecting the specific data from candidate specific data. For example, when the first electronic device has multiple digital business cards, an interface showing these cards can be displayed in the first electronic device, and a specific card can be selected via the interface. Similarly, when the second electronic device has multiple digital business cards, an interface showing these cards can be displayed in the second electronic device, and a specific card can be selected via the interface. The selected cards can be used for data exchange between the first and second electronic devices.

It is understood that, in some embodiments, it is determined whether a position corresponding to the first electronic device and a position corresponding to the second electronic device are within a predefined range. When the position corresponding to the first electronic device and the position corresponding to the second electronic device are within the predefined range, and the second signal conforms to the first signal, the specific data corresponding to the first electronic device is provided to the second electronic device, or the specific data corresponding to the first electronic device and the specific data corresponding to the second electronic device is exchanged.

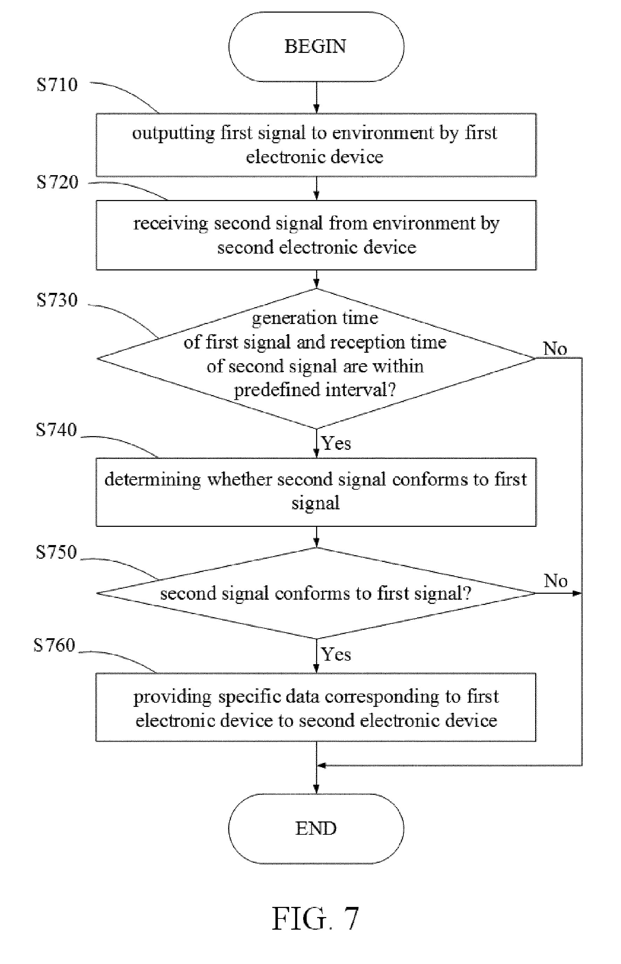

Fig. 7 is a flowchart of another embodiment of a method for providing data between electronic devices of the invention. The method for providing data between electronic devices can be used in a first electronic device and a second electronic device. As described, the electronic device can be any processor-based electronic device, such as a computer, or a portable device, such as a mobile phone, a smart phone, a PDA, a GPS, a tablet or a wearable device.

In step S710, the first electronic device outputs a first signal to an environment. It is understood that, in some embodiments, the signal output by the first electronic device may be a sound, a light code, an image, a pattern, and/or a smell. The generation of the first signal can be performed according to the embodiments of Fig. 5 or Fig. 6, however, the invention is not limited thereto. In step S720, the second electronic device receives a second signal from the environment via an environment data obtaining unit. It is noted that, when the first signal is output by the first electronic device, the second electronic device can simultaneously receive the second signal from the environment via the environment data obtaining unit. For example, when the first electronic device outputs a first sound to an environment via a sound output unit, the second electronic device can simultaneously receive sounds in the environment via a sound reception unit to obtain a second sound. When the first electronic device outputs a first light code to an environment via a light emitting unit, the second electronic device can simultaneously capture images in the environment via an image capture unit to obtain a second light code. When the first electronic device displays a first image or pattern via a display unit, the second electronic device can simultaneously capture images via an image capture unit to obtain a second image or pattern. When the first electronic device generates and outputs a first smell to an environment via a smell generation unit, the second electronic device can simultaneously detect the smell in the environment via a smell reception unit to obtain a second smell. Then, in step S730, it is determined whether a reception time when the second signal is received by the second electronic device and a generation time when the first signal is generated are within a predefined interval. When the reception time corresponding to the second signal and the generation time corresponding to the first signal are not within the predefined interval (No in step S730), the procedure is complete. When the reception time corresponding to the second signal and the generation time corresponding to the first signal are within the predefined interval (Yes in step S730), in step S740, it is determined whether the second signal received by the second electronic device conforms to the first signal output by the first electronic device. Similarly, in some embodiments, the step of determining whether the second signal conforms to the first signal is performed by respectively transforming the first signal and the second signal into first identification data and second identification data according to an algorithm, and determining whether the second identification data conforms to the first identification data. It is noted that, when the first signal is generated according to a specific algorithm, the determination for signals can be performed according to the specific algorithm. When the second signal does not conform to the first signal (No in step S750), the procedure is complete. When the second signal conforms to the first signal (Yes in step S750), in step S760, specific data corresponding to the first electronic device is provided to the second electronic device. Similarly, in some embodiments, when the second signal conforms to the first signal, the specific data corresponding to the first electronic device and specific data corresponding to the second electronic device is exchanged. It is noted that, in some embodiments, the specific data may be a digital business card, identification data, financial account information, and/or account information corresponding to an application. It is noted that, the specific data above is only an example of the present invention, and the invention is not limited thereto. Additionally, in some embodiments, an interface is respectively provided in the first electronic device and the second electronic device, for respectively selecting the specific data from candidate specific data.

Similarly, in some embodiments, it is determined whether a position corresponding to the first electronic device and a position corresponding to the second electronic device are within a predefined range. When the position corresponding to the first electronic device and the position corresponding to the second electronic device are within the predefined range, and the second signal conforms to the first signal, the specific data corresponding to the first electronic device is provided to the second electronic device, or the specific data corresponding to the first electronic device and the specific data corresponding to the second electronic device is exchanged.

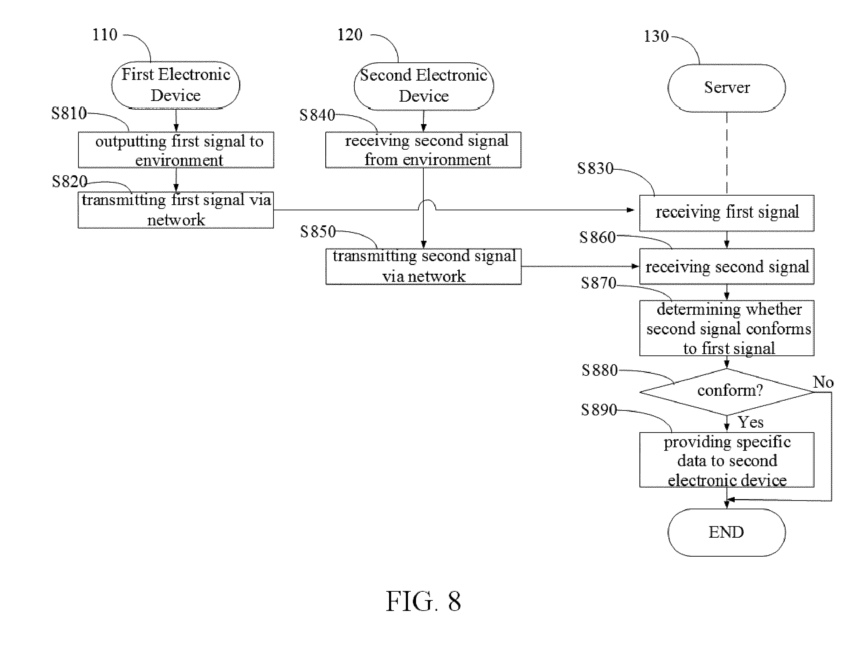

Fig. 8 is a flowchart of another embodiment of a method for providing data between electronic devices of the invention. The method for providing data between electronic devices can be used in a first electronic device, a second electronic device, and a server. As described, the electronic device can be any processor-based electronic device, such as a computer, or a portable device, such as a mobile phone, a smart phone, a PDA, a GPS, a tablet or a wearable device.

In step S810, the first electronic device 110 outputs a first signal to an environment. It is understood that, in some embodiments, the signal output by the first electronic device may be a sound, a light code, an image, a pattern, and/or a smell. The generation of the first signal can be performed according to the embodiments of Fig. 5 or Fig. 6, however, the invention is not limited thereto. In step S820, the first electronic device 110 transmits the first signal to the server 130 via a network, such as a wired network, a telecommunication network, and/or a wireless network. In step S830, the server 130 receives the first signal from the first electronic device 110 via the network. In step S840, the second electronic device 120 receives a second signal from the environment via an environment data obtaining unit. It is noted that, when the first signal is output by the first electronic device, the second electronic device can simultaneously receive the second signal from the environment via the environment data obtaining unit. After the second signal is received, in step S850, the second electronic device 120 transmits the second signal to the server 130 via a network, such as a wired network, a telecommunication network, and/or a wireless network. In step S860, the server 130 receives the second signal from the second electronic device 120 via the network. Then, in step S870, the server 130 determines whether the second signal received by the second electronic device 120 conforms to the first signal received from the first electronic device 110. Similarly, in some embodiments, the step of determining whether the second signal conforms to the first signal is performed by respectively transforming the first signal and the second signal into first identification data and second identification data according to an algorithm, and determining whether the second identification data conforms to the first identification data. It is noted that, when the first signal is generated according to a specific algorithm, the first electronic device can transmit information corresponding to the specific algorithm to the server, and the determination for signals can be performed according to the specific algorithm. When the second signal does not conform to the first signal (No in step S880), the procedure is complete. When the second signal conforms to the first signal (Yes in step S880), in step S890, specific data corresponding to the first electronic device is provided to the second electronic device. Similarly, in some embodiments, when the second signal conforms to the first signal, the specific data corresponding to the first electronic device and specific data corresponding to the second electronic device is exchanged. It is noted that, in some embodiments, the specific data may be a digital business card, identification data, financial account information, and/or account information corresponding to an application. It is noted that, the specific data above is only an example of the present invention, and the invention is not limited thereto. Additionally, in some embodiments, an interface is respectively provided in the first electronic device and the second electronic device, for respectively selecting the specific data from candidate specific data.

It is understood that, in some embodiments, the first electronic device can transmit the first identification data corresponding to the first signal to the server, and the second electronic device can transform the second signal into second identification data according to an algorithm, and transmit the second identification data to the server. Then, the server determines whether the second signal conforms to the first signal by determining whether the second identification data conforms to the first identification data.

Similarly, in some embodiments, the server can determine whether a reception time when the second signal is received by the second electronic device and a generation time when the first signal is generated are within a predefined interval. When the reception time corresponding to the second signal and the generation time corresponding to the first signal are within the predefined interval, and the second signal conforms to the first signal, the specific data corresponding to the first electronic device is provided to the second electronic device, or the specific data corresponding to the first electronic device and the specific data corresponding to the second electronic device is exchanged. Similarly, in some embodiments, the server can determine whether a position corresponding to the first electronic device and a position corresponding to the second electronic device are within a predefined range. When the position corresponding to the first electronic device and the position corresponding to the second electronic device are within the predefined range, and the second signal conforms to the first signal, the specific data corresponding to the first electronic device is provided to the second electronic device, or the specific data corresponding to the first electronic device and the specific data corresponding to the second electronic device is exchanged.

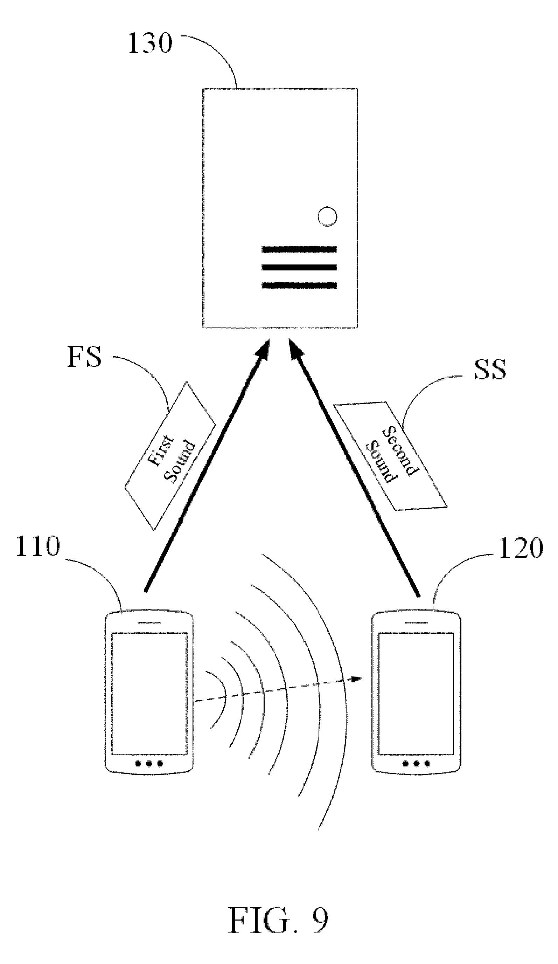

For example, Fig. 9 is a schematic diagram illustrating an example of data provision between electronic devices of the invention. As shown in Fig. 9, the first electronic device 110 plays a first sound via a sound output unit. Simultaneously, the second electronic device 120 can be moved to close the first electronic device 110, and receive sounds via a sound reception unit to obtain a second sound. The first electronic device 110 and the second electronic device 120 can respectively transmit the first sound FS and the second sound SS to the server 130 via a network. The server 130 can determine whether the second sound SS conforms to the first sound FS to decide whether to provide data corresponding to the first electronic device 110 to the second electronic device 120.

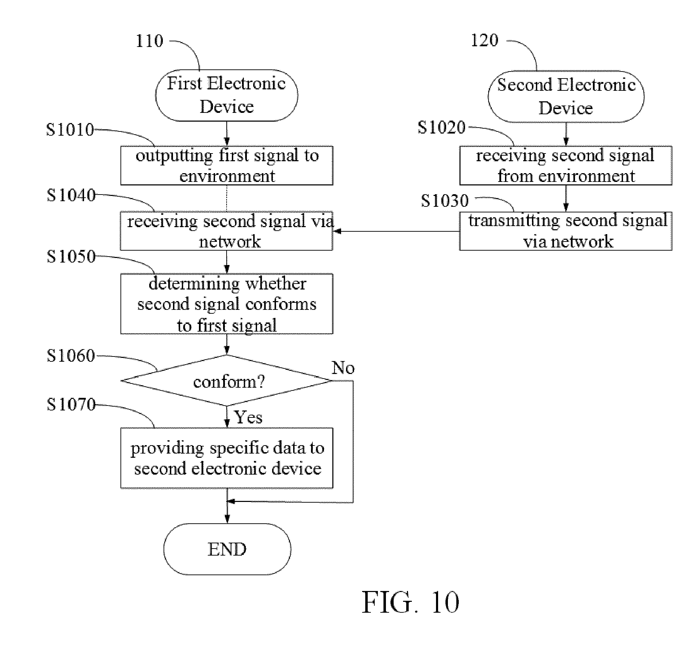

Fig. 10 is a flowchart of another embodiment of a method for providing data between electronic devices of the invention. The method for providing data between electronic devices can be used in a first electronic device and a second electronic device. As described, the electronic device can be any processor-based electronic device, such as a computer, or a portable device, such as a mobile phone, a smart phone, a PDA, a GPS, a tablet or a wearable device.

In step S1010, the first electronic device 110 outputs a first signal to an environment. It is understood that, in some embodiments, the signal output by the first electronic device may be a sound, a light code, an image, a pattern, and/or a smell. The generation of the first signal can be performed according to the embodiments of Fig. 5 or Fig. 6, however, the invention is not limited thereto. In step S1020, the second electronic device 120 receives a second signal from the environment via an environment data obtaining unit. It is noted that, when the first signal is output by the first electronic device, the second electronic device can simultaneously receive the second signal from the environment via the environment data obtaining unit. After the second signal is received, in step S1030, the second electronic device 120 transmits the second signal to the first electronic device 110 via a network, such as a wired network, a telecommunication network, and/or a wireless network. In step S1040, the first electronic device 110 receives the second signal from the second electronic device 120 via the network. Then, in step S1050, the first electronic device 110 determines whether the second signal received from the second electronic device 120 conforms to the first signal. Similarly, in some embodiments, the step of determining whether the second signal conforms to the first signal is performed by respectively transforming the first signal and the second signal into first identification data and second identification data according to an algorithm, and determining whether the second identification data conforms to the first identification data. It is noted that, when the first signal is generated according to a specific algorithm, the first electronic device can transmit information corresponding to the specific algorithm to the server, and the determination for signals can be performed according to the specific algorithm. When the second signal does not conform to the first signal (No in step S1060), the procedure is complete. When the second signal conforms to the first signal (Yes in step S1060), in step S1070, specific data corresponding to the first electronic device is provided to the second electronic device. Similarly, in some embodiments, when the second signal conforms to the first signal, the specific data corresponding to the first electronic device and specific data corresponding to the second electronic device is exchanged. It is noted that, in some embodiments, the specific data may be a digital business card, identification data, financial account information, and/or account information corresponding to an application. It is noted that, the specific data above is only an example of the present invention, and the invention is not limited thereto. Additionally, in some embodiments, an interface is respectively provided in the first electronic device and the second electronic device, for respectively selecting the specific data from candidate specific data.

Similarly, in some embodiments, the first electronic device can determine whether a reception time when the second signal is received by the second electronic device and a generation time when the first signal is generated are within a predefined interval. When the reception time corresponding to the second signal and the generation time corresponding to the first signal are within the predefined interval, and the second signal conforms to the first signal, the specific data corresponding to the first electronic device is provided to the second electronic device, or the specific data corresponding to the first electronic device and the specific data corresponding to the second electronic device is exchanged. Similarly, in some embodiments, the first electronic device can determine whether a position corresponding to the first electronic device and a position corresponding to the second electronic device are within a predefined range. When the position corresponding to the first electronic device and the position corresponding to the second electronic device are within the predefined range, and the second signal conforms to the first signal, the specific data corresponding to the first electronic device is provided to the second electronic device, or the specific data corresponding to the first electronic device and the specific data corresponding to the second electronic device is exchanged.

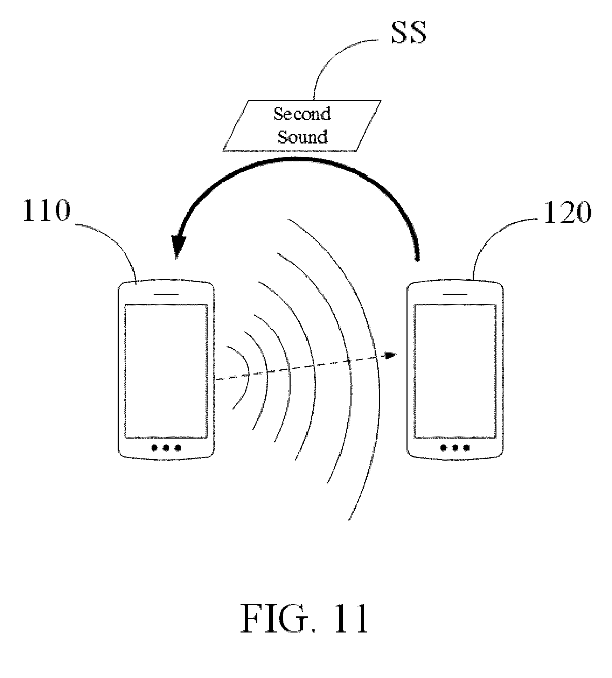

For example, Fig. 11 is a schematic diagram illustrating an example of data provision between electronic devices of the invention. As shown in Fig. 11, the first electronic device 110 plays a first sound via a sound output unit. Simultaneously, the second electronic device 120 can be moved close to the first electronic device 110, and receive sounds via a sound reception unit to obtain a second sound. After the second sound is obtained, the second electronic device 120 can transmit the second sound SS to the first electronic device 110 via a network. The first electronic device 110 can determine whether the second signal SS conforms to the first signal FS to decide whether to provide data corresponding to the first electronic device 110 to the second electronic device 120.

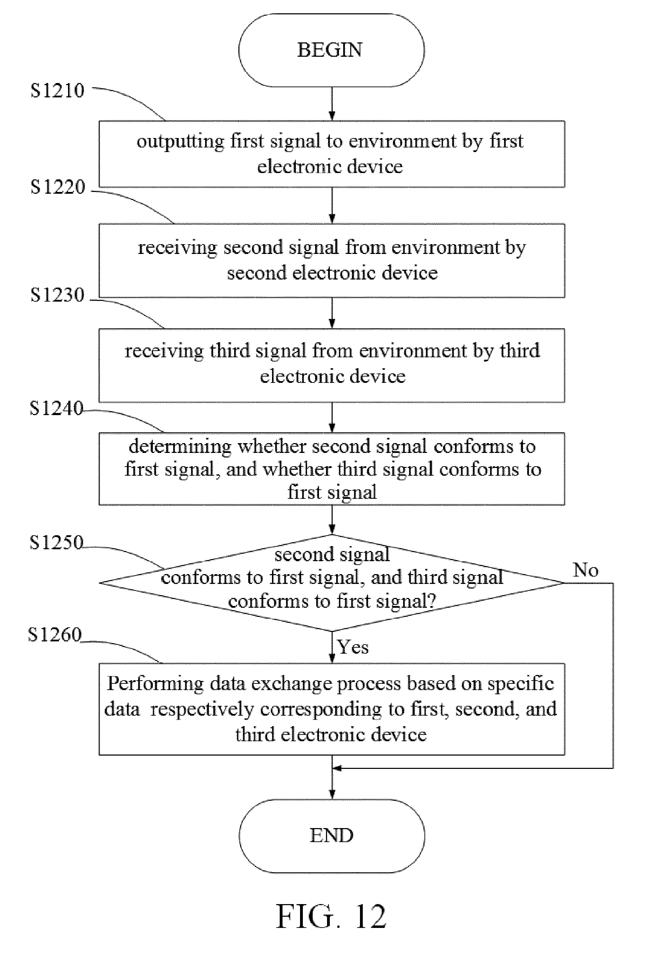

Fig. 12 is a flowchart of another embodiment of a method for providing data between electronic devices of the invention. The method for providing data between electronic devices can be used in a first electronic device, a second electronic device, and a third electronic device. As described, the electronic device can be any processor-based electronic device, such as a computer, or a portable device, such as a mobile phone, a smart phone, a PDA, a GPS, a tablet or a wearable device.

In step S1210, the first electronic device outputs a first signal to an environment. It is understood that, in some embodiments, the signal output by the first electronic device may be a sound, a light code, an image, a pattern, and/or a smell. The generation of the first signal can be performed according to the embodiments of Fig. 5 or Fig. 6, however, the invention is not limited thereto. In step S1220, the second electronic device receives a second signal from the environment via an environment data obtaining unit. In step S1230, the third electronic device receives a third signal from the environment via an environment data obtaining unit. It is noted that, when the first signal is output by the first electronic device, the second electronic device can simultaneously receive the second signal from the environment via the environment data obtaining unit. Similarly, when the first signal is output by the first electronic device, the third electronic device can simultaneously receive the third signal from the environment via the environment data obtaining unit. Then, in step S1240, it is determined whether the second signal received by the second electronic device conforms to the first signal output by the first electronic device, and whether the third signal received by the third electronic device conforms to the first signal output by the first electronic device. Similarly, in some embodiments, the step of determining whether the second signal conforms to the first signal is performed by respectively transforming the first signal and the second signal into first identification data and second identification data according to an algorithm, and determining whether the second identification data conforms to the first identification data. The step of determining whether the third signal conforms to the first signal is performed by respectively transforming the first signal and the third signal into first identification data and third identification data according to an algorithm, and determining whether the third identification data conforms to the first identification data. It is noted that, when the first signal is generated according to a specific algorithm, the determination for signals can be performed according to the specific algorithm. It is understood that, the determination of step S1240 can be performed by the first electronic device or a server. When the second signal does not conform to the first signal or the third signal does not conform to the first signal (No in step S1250), the procedure is complete. When the second signal conforms to the first signal and the third signal conforms to the first signal (Yes in step S1250), in step S1260, specific data corresponding to the first electronic device, specific data corresponding to the second electronic device, and specific data corresponding to the third electronic device is exchanged. It is noted that, in some embodiments, the specific data may be a digital business card, identification data, financial account information, and/or account information corresponding to an application. It is noted that, the specific data above is only an example of the present invention, and the invention is not limited thereto. Additionally, in some embodiments, an interface is respectively provided in the first electronic device, the second electronic device, and the third electronic device, for respectively selecting the specific data from candidate specific data.

Similarly, in some embodiments, it is determined whether a reception time when the second signal is received by the second electronic device, a reception time when the third signal is received by the third electronic device, and a generation time when the first signal is generated are within a predefined interval. When the reception time corresponding to the second signal, the reception time corresponding to the third signal, and the generation time corresponding to the first signal are within the predefined interval, and the second signal conforms to the first signal and the third signal conforms to the first signal, the specific data respectively corresponding to the first electronic device, the second electronic device, and the third electronic device is exchanged. Similarly, in some embodiments, it is determined whether a position corresponding to the first electronic device, a position corresponding to the second electronic device, and a position corresponding to the third electronic device are within a predefined range. When the position corresponding to the first electronic device, the position corresponding to the second electronic device, and the position corresponding to the third electronic device are within the predefined range, and the second signal conforms to the first signal and the third signal conforms to the first signal, the specific data respectively corresponding to the first electronic device, the second electronic device, and the third electronic device is exchanged.

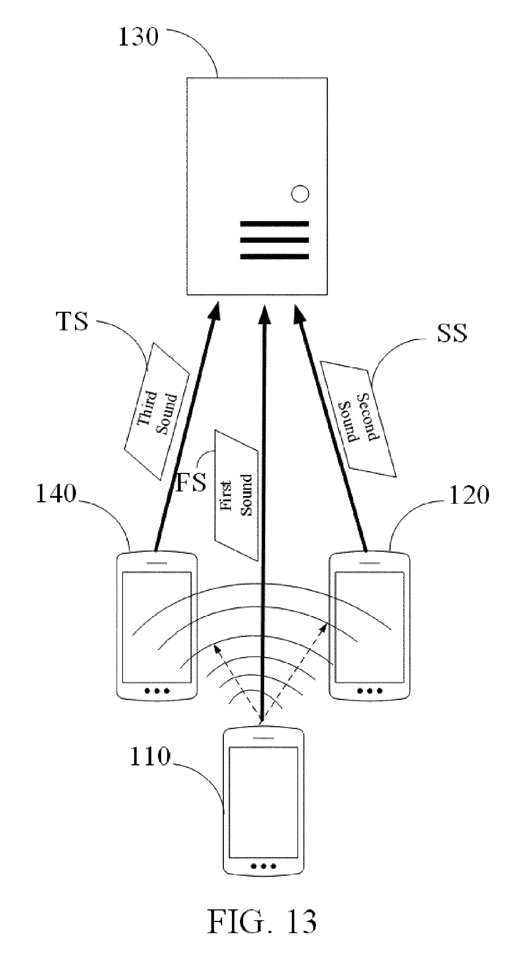

As an example, Fig. 13 is a schematic diagram illustrating data provision between electronic devices of the invention. As shown in Fig. 13, the first electronic device 110 plays a first sound via a sound output unit. Simultaneously, the second electronic device 120 can be moved close to the first electronic device 110, and receive sounds via a sound reception unit to obtain a second sound. Similarly, the third electronic device 150 can be moved close to the first electronic device 110, and receive sounds via a sound reception unit to obtain a third sound. The first electronic device 110, the second electronic device 120, and the third electronic device 150 can respectively transmit the first sound FS, the second sound SS, and the third sound TS to the server 130 via a network. The server 130 can determine whether the second sound SS conforms to the first sound FS, and whether the third sound TS conforms to the first sound FS, to decide whether to exchange specific data respectively corresponding to the first electronic device 110, the second electronic device 120, and the third electronic device 150.

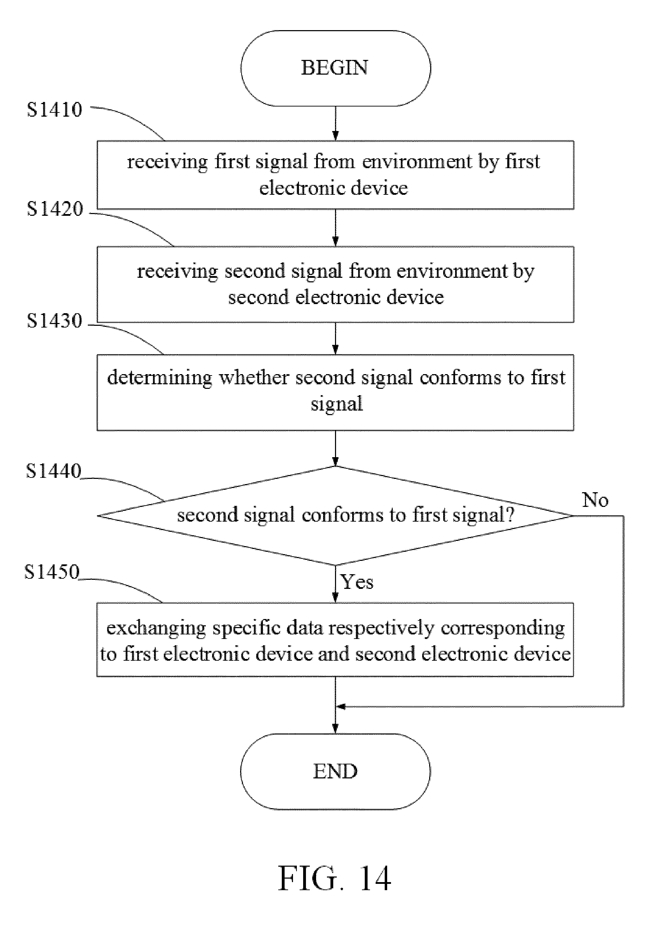

Fig. 14 is a flowchart of another embodiment of a method for providing data between electronic devices of the invention. The method for providing data between electronic devices can be used in a first electronic device and a second electronic device. As described, the electronic device can be any processor-based electronic device, such as a computer, or a portable device, such as a mobile phone, a smart phone, a PDA, a GPS, a tablet or a wearable device.

In step S1410, the first electronic device receives a first signal from an environment via an environment data obtaining unit. In step S1420, the second electronic device receives a second signal from the environment via an environment data obtaining unit. It is understood that, in some embodiments, a specific signal exists in the environment. In some embodiments, a specific user can generate the specific signal in the environment. When the specific signal is present, the first electronic device can simultaneously obtain the first signal from the environment via the environment data obtaining unit. Similarly, when the specific signal is present, the second electronic device can simultaneously obtain the second signal from the environment via the environment data obtaining unit. It is understood that, in some embodiments, the specific signal may be a sound, a light code, an image, a pattern, and/or a smell. The generation of the specific signal can be performed according to the embodiments of Fig. 5 or Fig. 6, however, the invention is not limited thereto. Then, in step S1430, it is determined whether the second signal received by the second electronic device conforms to the first signal received by the first electronic device. Similarly, in some embodiments, the step of determining whether the second signal conforms to the first signal is performed by respectively transforming the first signal and the second signal into first identification data and second identification data according to an algorithm, and determining whether the second identification data conforms to the first identification data. It is noted that, the determination of step S1430 can be performed by the first electronic device and/or the second electronic device. In some embodiments, the first electronic device and the second electronic device can respectively transmit the first signal and the second signal to a server via a network, and the determination of step S1430 is performed by the server. When the second signal does not conform to the first signal (No in step S1440), the procedure is complete. When the second signal conforms to the first signal (Yes in step S1440), in step S1450, specific data corresponding to the first electronic device and specific data corresponding to the second electronic device is exchanged. It is noted that, in some embodiments, the specific data may be a digital business card, identification data, financial account information, and/or account information corresponding to an application. It is noted that, the specific data above is only an example of the present invention, and the invention is not limited thereto. Additionally, in some embodiments, an interface is respectively provided in the first electronic device and the second electronic device, for respectively selecting the specific data from candidate specific data.

Similarly, in some embodiments, it is determined whether a reception time when the first signal is received by the first electronic device and a reception time when the second signal is received by the second electronic device are within a predefined interval. When the reception time corresponding to the first signal and the reception time corresponding to the second signal are within the predefined interval, and the second signal conforms to the first signal, the specific data respectively corresponding to the first electronic device and the second electronic device is exchanged. Similarly, in some embodiments, it is determined whether a position corresponding to the first electronic device and a position corresponding to the second electronic device are within a predefined range. When the position corresponding to the first electronic device and the position corresponding to the second electronic device are within the predefined range, and the second signal conforms to the first signal, the specific data respectively corresponding to the first electronic device and the second electronic device is exchanged.

It is understood that, in the above data provision and/or data exchange process, the specific data is actually transmitted or provided to the electronic devices. However, in some embodiments, data provision or data exchange can be accomplished in the server. In some cases, data provision or data exchange means that an electronic device and/or its user may have a right to obtain data corresponding to another electronic device and/or its user.

Therefore, the methods and systems for providing data between electronic devices of the present invention can determine whether to provide data corresponding to an electronic device to another electronic device based on signals received from an environment, thereby increasing the applicability, accuracy, and security of data transmission between electronic devices.

Methods for providing data between electronic devices, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A method for providing data between electronic devices, comprising:
outputting a first signal to an environment, and transmitting the first signal to a server (130) via a first network by a first electronic device (110);
receiving a second signal from the environment via an environment data obtaining unit (310), and transmitting the second signal to the server (130) via a second network by a second electronic device (120);
determining whether the second signal conforms to the first signal by the server (130); and
providing first data corresponding to the first electronic device (110) to the second electronic device (120) when the second signal conforms to the first signal.

2. The method of claim 1, further comprising exchanging the first data corresponding to the first electronic device (110) and second data corresponding to the second electronic device (120) when the second signal conforms to the first signal.

3. The method of claims 1 or 2, further comprising:
determining whether a reception time when the second signal is received by the second electronic device (120) and a generation time when the first signal is generated are within a predefined interval by the server (130); and
providing the first data corresponding to the first electronic device (110) to the second electronic device (120) when the reception time corresponding to the second signal and the generation time corresponding to the first signal are within the predefined interval, and the second signal conforms to the first signal.

4. The method of claims 1, 2 or 3, further comprising:
determining whether a position corresponding to the first electronic device (110) and a position corresponding to the second electronic device (120) are within a predefined range by the server (130); and
providing the first data corresponding to the first electronic device (110) to the second electronic device (120) when the position corresponding to the first electronic device (110) and the position corresponding to the second electronic device (120) are within the predefined range, and the second signal conforms to the first signal.

5. The method of claims 1, 2, 3 or 4, further comprising generating first identification data, and transforming the first identification data into the first signal according to an algorithm by the first electronic device (110), wherein the step of determining whether the second signal conforms to the first signal is performed by respectively transforming the first signal and the second signal into first identification data and second identification data according to the algorithm, and determining whether the second identification data conforms to the first identification data.

6. A method for providing data between electronic devices, comprising:
generating first identification data, transforming the first identification data into a first signal according to an algorithm, and outputting the first signal to an environment by a first electronic device (110);
receiving a second signal from the environment via an environment data obtaining unit by a second electronic device (120);
determining whether the second signal conforms to the first signal; and
providing first data corresponding to the first electronic device (110) to the second electronic device (120) when the second signal conforms to the first signal.

7. The method of claim 6, further comprising transmitting the second signal to the first electronic device (110) by the second electronic device (120), and the step of determining whether the second signal conforms to the first signal is performed by the first electronic device (110).

8. A method for providing data between electronic devices, comprising:
receiving a first signal from an environment by a first electronic device (110);
receiving a second signal from the environment by a second electronic device (120);
determining whether the second signal conforms to the first signal; and
exchanging first data corresponding to the first electronic device (110) and second data corresponding to the second electronic device (120) when the second signal conforms to the first signal.

9. A system for providing data between electronic devices (100) for use in a first electronic device (110), comprising:
an output unit (220) outputting a first signal to an environment;
a network connecting unit (230) receiving a second signal from a specific electronic device (120) via a network (140); and
a processing unit (240) generating first identification data, and transforming the first identification data into the first signal according to an algorithm, determining whether the second signal conforms to the first signal, and providing first data corresponding to the first electronic device (110) to the specific electronic device (120) when the second signal conforms to the first signal.

10. A system for providing data between electronic devices (100), comprising:
a server (130);
a first electronic device (110) having first data, outputting a first signal to an environment via an output unit (220), and transmitting the first signal to the server (130) via a first network; and
a second electronic device (120) receiving a second signal from the environment via an environment data obtaining unit (310), and transmitting the second signal to the server (130) via a second network,
wherein the server (130) determines whether the second signal conforms to the first signal, and provides the first data corresponding to the first electronic device (110) to the second electronic device (120) when the second signal conforms to the first signal.

11. A system for providing data between electronic devices (100), comprising:
a first electronic device (110) receiving a first signal from an environment; and
a second electronic device (120) receiving a second signal from the environment,
wherein the first electronic device (110) or the second electronic device (120) determines whether the second signal conforms to the first signal, and first data corresponding to the first electronic device (110) and second data corresponding to the second electronic device (120) is exchanged when the second signal conforms to the first signal.

12. A system for providing data between electronic devices (100), comprising:
a server (130);
a first electronic device (110) receiving a first signal from an environment, and transmitting the first signal to the server (130) via a first network; and
a second electronic device (120) receiving a second signal from the environment, and transmitting the second signal to the server (130) via a second network,
wherein the server (130) determines whether the second signal conforms to the first signal, and exchanges first data corresponding to the first electronic device (110) and second data corresponding to the second electronic device (120) when the second signal conforms to the first signal.
